# EUROPÄISCHE PATENTSCHRIFT

(11) **EP 1 887 834 B1**
(45) Veröffentlichungstag und Bekanntmachung des Hinweises auf die Patenterteilung: **28.11.2012**
(21) Anmeldenummer: 07021471.3
(22) Anmeldetag: 17.01.2003
(51) Int. Cl.: G01K 1/12, G01K 1/16, G01K 3/00, G01K 5/50

(54) **Temperaturfühler**
Temperature sensor
Sonde de température

(30) Priorität: 25.02.2002 AT 2792002
(43) Veröffentlichungstag der Anmeldung: 13.02.2008
(62) Teilanmeldung aus: 03450018.1
(73) Patentinhaber: Ceramaspeed Inc., Maryville, TN 37801 (US)
(72) Erfinder: Morbitzer, Hans-Peter, Ing., 3452 Atzenbrugg (AT)
(74) Vertreter: Gibler & Poth Patentanwälte OG

(56) Entgegenhaltungen:
- GB-A- 268 645
- US-A- 2 548 050
- US-A- 2 777 919
- US-A- 3 004 123
- US-A- 3 310 647

## Beschreibung

Die Erfindung betrifft einen Temperaturfühler mit einem Fühlerrohr und einem darin angeordneten Fühlerstab, wobei das Fühlerrohr und der Fühlerstab, unterschiedliche Wärmeausdehnungskoeffizienten aufweisen, und wobei das eine Ende des Fühlerstabes an einem Endstück im Bereich des freien Endes des Fühlerrohres abgestützt und das andere Ende des Fühlerstabes als Betätigungsglied einer Schaltkontakt-Einheit ausgebildet ist.

Temperaturfühler, die aufgrund der unterschiedlichen Wärmeausdehnungskoeffizienten ihrer Komponenten die Betätigung eines Schaltkontaktes bewirken, haben sich aufgrund ihrer Robustheit in der Praxis vielfach bewährt. Da diese in sehr hohen Stückzahlen hergestellt werden, wird eine möglichst zuverlässige und kostengünstige Bauform angestrebt. Insbesondere soll eine möglichst kleine Baugröße und ein möglichst geringer Materialverbrauch bei der Erzeugung der Temperaturfühler erreicht werden, zugleich soll aber eine sichere Betätigung eines Schaltkontaktsystems gewährleistet sein. Die für die Koneaktbetätigung zur Verfügung stehende aktive Länge, die bei Erwärmung des Temperaturfühlers von der Längenausdehnung betroffen ist, soll daher im Vergleich zur Gesamtlänge des Temperaturfühlers möglichst hoch sein.

Bei dem gemäß EP 476 304 A verwendeten Endstück für das Fühlerrohr, welches in den Endteil desselben hineinreicht, geht ein erheblicher Teil der Frühlerrohrlänge für die aktive Länge des Temperaturfühlers verloren.

Aus der US 3 310 647 A ist ein Temperaturfühler bekannt, welcher eine große aktive Länge im Vergleich zur Gesamtlänge des Temperaturfühlers aufweist. Das Endstück des Fühlerstabes ist zwischen dem Fühlerohr und der Rohrkappe fixiert ist, um Relativbewegungen zwischen dem Endstück des Fühlerstabes und dem Ende des Fühlerrohres zu unterbinden.

Die GB 268 645 A offenbart einen Temperaturfühler mit einem Fühlerrohr und einem darin angeordneten Fühlerstab, wobei der Fühlerstab aus mehreren Segmenten besteht.

Die US 3 004 123 A zeigt einen Temperaturfübler mit einem Fühlerrohr und einem darin angeordneten Fühlerstab, wobei das äußere Ende des Fühlerrohres und des Fühlerstabes fix miteinander verbunden sind, entweder durch eine Verschraubung oder durch einen Bolzen. Aus der US 2 548 050 A ist ein Temperaturfühler mit einem Fühlerrohr und einem darin angeordneten Fühlerstab bekannt, wobei das äußere Ende des Fühlerrohres und des Fühlerstabes fix miteinander verbunden sind. Das äußere Ende des Fühlerrohres wird dabei durch einen Stöpsel gebildet, mit welchen das äußere Ende des Fühlerstabes vernietet ist.

Die US 2 777 919 A offenbart einen Temperaturfühler mit einem Fühlerrohr und einem darin angeordneten Fühlerstab, wobei das äußere Ende des Fühlerrohres und des Fühlerstabes ebenfalls fix miteinander verbunden sind. Weiters ist gemäß der US 2 777 919 A vorgesehen, dass das Fühlerrohr durch eine Heizspule temperiert wird.

Aufgabe der Erfindung ist es daher, einen Temperaturfühler der eingangs genannten Art anzugeben, bei dem eine möglichst große aktive Länge des Temperaturfühlers erzielt wird.

Erfindungsgemäß wird dies dadurch erreicht, daß das Endstück des Fühlerrolwes durch eine das freie Ende des Fühlerrohres abschließende Rohrkappe gebildet ist, die unlösbar mit dem Fühlerrohr verbunden ist, und daß das eine Ende des Füblerstabes an der dem Inneren des Fühlerrohres zugekehrten Innenseite der Rohrkappe abgestützt ist.

Die Rohrkappe schließt das Fühlerrohr an dessen äußerstem Ende ab und verlängert dieses im Ausmaß des darüber hinausragenden Teils der Rohrkappe, sodaß zumindest die gesamte Rohrlänge als aktive Länge wirkt. Weist die Rohrkappe einen ähnlichen Wärmeausdehnungskoeffizienten wie das Fühlerrohr auf, so vergrößert sie die aktive Länge desselben. Schließlich ergibt sich durch die Rohrkappe ein verläßlicher Abschluß des Fühlerrohres, sodaß dieser nach außen vollkommen abgedichtet ist, wodurch die Wirkung äußerer Einflüsse auf das Ausdehnungsverhalten des erfindungsgemäßen Temperaturfühlers verläßlich verhindert werden kann.

Eine dauerhafte und zugleich ausreichend feste Verbindung zwischen der Rohrkappe und dem Fühlerrohr kann gemäß einer Weiterbildung der Erfindung dadurch erreicht werden, daß die Rohrkappe mit dem Fühlerrohr verschweißt, insbesondere laser-verschweißt ist.

Erfindungsgemäß ist die Rohrkappe durch ein Rohrstück gebildet sein und der Innendurchmesser des Rohrstückes ist größer als der Außendurchmesser des Fühlerrohres. Die Rohrkappe kann an sich eine beliebige Form haben, solange diese gewährleistet, daß der im Fühlerrohr verlaufende Fühlerstab sicher gegenüber dem Endbereich des Fühlerrohres abgestützt ist. Eine Robrkappe in Form eines Rohrstückes ist einerseits einfach herstellbar und kann andererseits auf einfache Weise an das Fühlerrohr angepaßt werden.

Ein Merkmal der Erfindung besteht darin daß die Rohrkappe durch ein in das freie Ende des Fühlerrohres eingeschobenes Rohrstück gebildet ist, wobei das freie Ende des Fühlerrohres einen Endbereich mit einem gegenüber dem Innendurchmesser des Fühlerrohres vergrößerten Innendurchmesser aufweist, sodaß der Innendurchmesser des durchmesser-vergrößerten Endbereiches größer als der Außendurchmesser des Rohrstückes ist.

Durch den durchmesser-vergrößerten Endbereich des Fühlerrohres kann die Rohrkappe in das Fühlerrohr eingeführt und dort fixiert werden. Obwohl das so eingesetzte Rohrstück teilweise in das Fühlerrohr hineinreicht, wird die aktive Länge des Fühlerrohres nicht verkleinert, da der Fühlerstab an der aus dem Fühlerrohr ragenden Endfläche des Rohrstückes abgestützt ist.

Gemäß einer weiteren Ausbildung der Erfindung kann das Rohrstück an einer Seite durch eine im wesentlichen normal zur Rohrachse verlaufende, planebene Endfläche abgeschlossen sein. An der Innenseite dieser Endfläche stützt sich das Ende des Fühlerstabes ab.

Um eine exakte Anlage des Fühlerstabes innerhalb des Fühlerrohres zu erreichen, kann in weiterer Ausbildung der Erfindung vorgesehen sein, daß die Endfläche des Rohrstückes eine mittige, nach innen gerichtete Wölbung, insbesondere in Form einer Kugelkalotte, aufweist, an welcher der Fühlerstab abgestützt ist. Bei Verkippen des Fühlerstabes verringert diese Wölbung Veränderungen der Stützlänge, welche sich auf das Schaltverhalten des Temperaturfühlers auswirken.

Eine besondere Eignung für Hochtemperaturanwendungen läßt sich dadurch erzielen, daß das Fühlerrohr aus einem hochtemperaturbeständigen Metall, vorzugsweise aus einer CrNi-Legierung gebildet ist.

Ein im Vergleich zu Metall sehr niedriger Wärmeausdehnungskoeffizient kann dadurch erreicht werden, daß gemäß einer weiteren Ausführungsform der Erfindung der Fühlerstab aus einer Keramik oder Quarzglas gebildet ist.

Wenn die Rohrkappe den gleichen Wärmeausdehnungskoeffizienten wie das Fühlerrohr hat, dann ergibt sich durch die Rohrkappe eine Verlängerung des Fühlerrohres über dessen Ende hinaus, was eine Erhöhung der aktiven Länge des Fühlerrohres zur Folge hat. In diesem Zusammenhang kann gemäß einer weiteren Ausbildung der Erfindung vorgesehen sein, daß die Rohrkappc aus einem hochtemperaturbeständigen Metall, vorzugsweise aus einer CrNi-Legierung gebildet ist.

Weiters behandelt ist ein Temperaturfühler mit einem Fühlerrohr und einem darin angeordneten Fühlerstab, wobei das Fühlerrohr und der Fühlerstab unterschiedliche Wärmeausdehnungskoeffizienten aufweisen, wobei das eine Ende des Fühlerstabes im Bereich des freien Endes des Fühlerrohres abgestützt und das andere Ende des Fühlerstabes als Betätigungsglied einer von einem Isolationskörper zumindest teilweise umgebenen Schaltkontakt-Einheit ausgebildet ist, und wobei das Fühlerrohr mit dem darin angeordneten Fühlerstab durch eine Durchbrechung des Isolationskörpers hindurchgeführt ist, an welcher Durchbrechung eine Stützlasche vorgesehen ist, die entweder unmittelbar mit dem an der Durchbrechung abgestützten Fühlerrohr oder mit einem in die Durchbrechung eingesetzten Rohrsitz verbunden ist, an welchem Rohrsitz das Fühlerrohr abgestützt ist.

Bei bisher bekannten Temperaturfühlern wurde der Rohrsitz des Fühlerrohres in der Durchbrechung des Isolationskörpers lediglich mit der Stützlasche verschraubt oder diese wurden durch Nieten oder Verschränken miteinander verbunden. Bei dieser Bauweise ergeben sich allerdings Öffnungen in das Innere des Isolationskörpers, welcher die Schaltkontakt-Einheit beherbergt. Die von außen eindringenden Partikeln beeinflussen das Schaltverhalten der Schaltkontakt-Einlieit negativ.

Aufgabe ist es daher, einen Temperaturfühler dieser genannten Art anzugeben, bei dem der Isolationskörper mit der Schaltkontakt-Einheit im Bereich der Durchbrechung für das Fühlerrohr staubdicht gegenüber dem Außenbereich abgeschlossen ist.

Weitere Aufgabe ist es, einen Temperaturfühler anzugeben, der ein rasches, dauerhaftes und spielfreies Festlegen des Fühlerrohres oder des Fühlerrohr-Rohrsitzes sowie eine kostengünstige Ausbildung der verwendeten Komponenten ermöglicht.

Dies wird dadurch erreicht, daß die Stütziasche mit dem Rohrsitz oder unmittelbar mit dem Fühlerrohr verschweißt ist, sodaß der die Isolationskörper-Durchbrechung umgebende Wandungsbereich des Isolationskörpers zwischen der Stützlasche und dem Rohrsitz bzw. dem Fühlerrohr gehalten ist.

Durch den Schweißvorgang kann die Stützlasche so mit dem Fühlerrohr oder mit dem Rohrsitz für das Fühlerrohr verbunden werden, daß keine Staubteilchen von außen in das Innere des Isolationskörpers eindringen können. Der Schweißvorgang ermöglicht darüber hinaus ein kostengünstiges Ausführen der zu verbindenden Teile und ein rasches Ausführen der Verbindung, die robust ist und eine lagesichere Anordnung der zu verbindenden Teile ergibt.

Ein unmittelbares Verschweißen des Fühlerrohres mit der Stützlasche setzt ein metallisches Fühlerrohr voraus, weshalb gemäß einer weiteren Ausbildung des Temperaturfühlers mit dem Fühlerrohr das Fühlerrohr aus einem Metall, insbesondere aus einem hochtemperaturbeständigen Metall, vorzugsweise aus einer CrNi-Legierung gebildet sein kann.

Die Stützlasche kann auch für die Festlegung des Temperaturfühlers an einer dafür bestimmten Vorrichtung vorgesehen sein. Eine Weiterbildung des Temperaturfühlers mit dem Fühlerrohr kann daher darin bestehen, daß die Stützlasche - in an sich bekannter Weise - mindestens eine Bohrung zur Befestigung des Temperaturfühlers an einem Heizkörper aufweist.

Eine weitere Variante kann darin bestehen, daß der Rohrsitz rohrförmig ausgebildet ist, dessen Außendurchmesser kleiner als der Durchmesser der Isolationskörper-Durchbrechung und dessen Innendurchmesser größer als der Durchmesser des Fühlerrohres ausgebildet ist, und daß an einem Ende des Rohrsitzes ein Rohrflansch ausgebildet ist. Der rohrförmige Rohrsitz mit Flansch ermöglicht einen satten Sitz des Fühlerrohres und die Bereitstellung einer stabilen Abstützung des Fühlerrohres gegenüber dem Isolationskörper.

Eine ausreichend stabile und dauerhafte Verschweißung läßt sich dadurch erreichen, daß die Stützlasche eine Durchbrechung aufweist, durch die das Fühlerrohr hindurchgeführt ist, und daß um die Durchbrechung im Bereich der Stoßfläche mit dem Rohrsitz Schweißpunkt-Erhebungen angeordnet sind.

Eine kostengünstige und einfach herstellbare Form der Abstützung stellt eine Variante des Temperaturfühlers mit dem Fühlerrohr dar, bei der das Fühlerrohr über einen flanschförmigen Ansatz an der Isolationskörper-Durchbrechung oder am Rohrsitz abgestützt ist.

Ein stabiler Sitz des Fühlerrohres kann in weiterer Ausbildung des Temperaturfühlers mit dem Fühlerrohr dadurch erreicht werden, daß das Fühlerrohr im Bereich der Isolationskörper-Durchbrechung einen größeren Durchmesser als in seinem vom Isolationskörper vorragenden Bereich aufweist. Das derartig aufgeweitete Ende des Fühlerrohres erhöht das für eine Biegung erforderliche Biegemoment.

Die Erfindung wird nachfolgend anhand der in den Zeichnungen dargestellten Ausführungsbeispiele eingehend erläutert. Es zeigt dabei
Fig.1 einen Schnitt durch einen Heizkörper mit einem Temperaturfühler entlang der in Fig.2 gezeigten Linie I-I;
Fig.2 eine Draufsicht auf den in Fig.1 gezeigten Heizkörper;
Fig.3 einen Längsschnitt durch eine Ausführungsform des erfindungsgemäßen Temperaturfühlers;
Fig.4 einen teilweisen Schnitt durch eine weitere Ausführungsform des erfindungsgemäßen Temperaturfühlers;
Fig.5 einen teilweisen Schnitt durch eine weitere Ausführungsform des erfindungsgemäßen Temperaturfühlers und
Fig.6 einen teilweisen Längsschnitt durch einen erfindungsgemäßen Temperaturfühler.

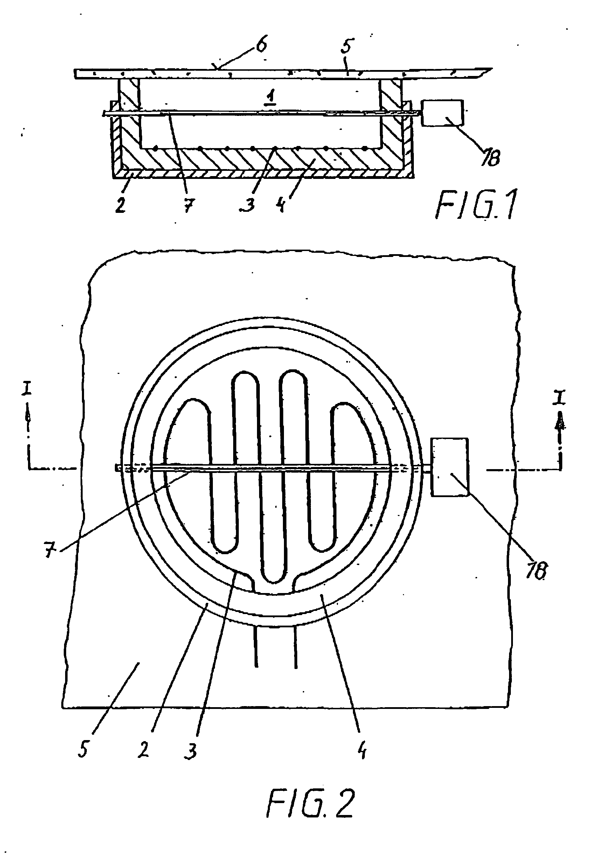

Fig.1 und 2 zeigen einen Strahlungs-Heizkörper 1 mit einer Heizplatte 5 aus Metall, Glaskeramik od. dgl., die von einer mäanderförmig sich im Bodenbereich des Strahlungs-Heizkörpers 1 erstreckenden Heizwendel 3 beheizbar ist, welche in einer Einbettmasse 4 eingebettet ist. Die Einbettmasse 4 ist ihrerseits von einem Topf 2 umgeben, der den Strahlungs-Heizkörper 1 nach unten hin abschließt. Die Oberseite der Heizplatte 5 bildet z.B. eine Kochfläche 6 aus, auf der Töpfe, Pfannen od. dgl. erhitzt werden können.

Zwischen der Heizplatte 5 und der Heizwendel 3 ist ein Temperaturfühler 7 angeordnet, der mit einem Schaltkopf 18 in Verbindung steht, wobei der Temperaturfühler 7 durch seitliche Bohrungen des Strahlungs-Heizkörpers 1 hindurchgeführt ist.

Der Temperaturfühler 7 ist somit der Temperatur im Strahlungsraum zwischen der Heizwendel 3 und der Heizplatte 5 ausgesetzt und kann diese somit erfassen, sodaß die Temperatur der Heizplatte 5 mit Hilfe des Temperaturfühlers 7 und des damit gesteuerten Schaltkopfes 18 geregelt werden kann. Er ist aber im Rahmen der Erfindung nicht auf diese konkrete Anwendungsform beschränkt.

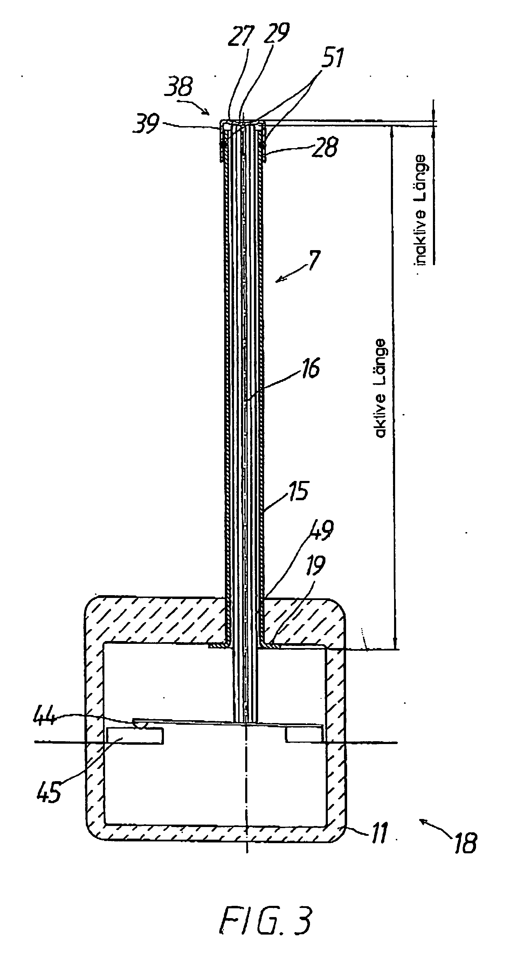

Aus Fig.3 geht der innere Aufbau und die Funktionsweise des Temperaturfühlers 7 hervor, der ein Fühlerrohr 15 und einen darin angeordneten Fühlerstab 16 umfaßt, wobei das Fühlerrohr 15 und der Fühlerstab 16 unterschiedliche Wärmeausdehnungskoeffizienten aufweisen. Eine Erwärmung des Temperaturfühlers 7 hat daher eine unterschiedliche Längenausdehnung des Fühlerrohres 15 und des Fühlerstabes 16 zur Folge.

Da das eine Ende des Fühlerstabes 16 an einem Endstück 38 im Bereich des freien Endes des Fühlerrohres 15 abgestützt und das andere Ende des Fühlerstabes 16 als Betätigungsglied einer Schaltkontakt-Einheit 44, 45 innerhalb des Schaltkopfes 18 ausgebildet ist, führt die unterschiedliche Längenausdehnung des Fühlerrohres 15 und des Fühlerstabes 16 zu einer Relativverschiebung des dem freien Ende des Fühlerrohres 15 gegenüberliegenden Ende des Fühlerstabes 16, die zur Betätigung der Schaltkontakt-Einheit 44, 45 führt. Nicht eingezeichnet in Fig.3 ist dabei die von z.B. einer Feder ausgeübte Vorspannung auf den Fühlerstab 16, die diesen gegen das Endstück 38 des Fühlerrohres 15 drückt.

Ist nun der Wärmeausdehnungskoeffizient des Fühlerrohres 15 größer als der des Fühlerstabes 16, so verschiebt sich während eines im Bereich des Temperaturfühlers stattfindenden Aufheizvorganges bei der in Fig.3 gezeigten Schaltkontakt-Einheit 44, 45 das Ende des Fühlerstabes 16 in Richtung nach oben und die auf das Kontaktstück 45 gedrückte Kontaktfeder 44 öffnet den geschlossenen Schaltkontakt. Durch geeignete Wahl des Wärmeausdehnungskoeffizienten von Fühlerrohr 15 und Fühlerstab 16 sowie durch entsprechende Positionierung des Endstückes 38 kann somit die Schaltcharakteristik der Schaltkontakt-Einheit 44, 45 des Schaltkopfes 18 beeinflußt werden.

Im Ausführungsbeispiel gemäß Fig.3 ist das Fühlerrohr 15 aus einem Metall, insbesondere aus einem hochtemperaturbeständigen Metall, vorzugsweise aus einer CrNi-Legierung, der Fühlerstab 16 aus einer Keramik oder Quarzglas gebildet.

Das Fühlerrohr 15 ist an dem schaltkontaktseitigen Ende mit einem Flansch 19 versehen, mit dem es gegen einen Isolationskörper 11 abgestützt ist, der die Schaltkontakt-Einheit 44, 45 umgibt. Dabei ist das Fühlerrohr 15 durch eine Durchbrechung 49 des Isolationskörpers 11 hindurchgeführt.

Erfindungsgemäß ist vorgesehen, daß das Endstück 38 des Fühlerrohres 15 durch eine das freie Ende des Fühlerrohres 15 abschließende Rohrkappe 39 gebildet ist, die unlösbar mit dem Fühlerrohr 15 verbunden ist, wobei das eine Ende des Fühlerstabes 16 an der dem Inneren des Fühlerrohres 15 zugekehrten Innenseite der Rohrkappe 39 abgestützt ist.

Vorzugsweise ist die Rohrkappe 39 mit dem Fühlerrohr 15 verschweißt, insbesondere laser-verschweißt. Dazu wird die Rohrkappe 39 auf das freie Ende des Fühlerrohres 15 aufgesetzt und dann mittels Laserbeaufschlagung verschweißt. Die Schweißnaht muß dem gegen die Innenseite der Rohrkappe 39 wirkenden Druck des Fühlerstabes 16 standhalten.

Im Ausführungsbeispiel gemäß Fig.3 ist der Querschnitt des Fühlerrohres 15 kreisförmig ausgebildet, dieser kann aber im Rahmen der Erfindung - ebenso wie der Querschnitt des Fühlerstabes 16 - in beliebiger Form ausgeführt sein

Dementsprechend ist die Rohrkappe 39 in Fig.3 durch ein Rohrstück 28 gebildet, dessen Innendurchmesser größer als der Außendurchmesser des Fühlerrohres 15 ist und das an einer Seite durch eine im wesentlichen normal zur Rohrachse verlaufende, planebene Endfläche 27 abgeschlossen ist. Das derartig mit der Endfläche 27 versehene Rohrstück 28 kann z.B. aus einem tiefgezogenen Blechteil gebildet sein.

Das über das freie Ende des Fühlerrohres 15 gestülpte Rohrstück 28 wird mit dem Fühlerrohr 15 verschweißt.

Die Endfläche 27 des Rohrstückes 28 weist eine mittige, nach innen gerichtete Wölbung, insbesondere in Form einer Kugelkalotte 29, auf, an welcher der Fühlerstab 16 abgestützt ist. Vorzugsweise ist die Rohrkappe 39 aus demselben Metall wie das Fühlerrohr 15, insbesondere aus einem hochtemperaturbeständigen Metall, vorzugsweise aus einer CrNi-Legierung gebildet.

Die aufgrund einer Temperaturerhöhung erzielbare Relativverschiebung zwischen dem Fühlerrohr 15 und dem Fühlerstab 16 hängt von den unterschiedlichen Wärmeausdehnungskoeffizienten, von der Temperaturdifferenz aber auch von der für die Ausdehnungsbewegung aktiv wirkenden Länge der Kombination Fühlerrohr-Fühlerstab ab.

Der Vorteil der Rohrkappe 39 besteht in der hohen aktiven Länge des erfindungsgemäßen Temperaturfühlers 7, die für die Temperaturausdehnung zur Verfügung steht, wie aus Fig. 3 ersichtlich ist. Da die Rohrkappe 39 selbst einer Wärmeausdehnung unterliegt, addiert ihre Ausdehnung sich zur Wärmeausdehnung des Fühlerrohres 15 und erhöht somit die Längendifferenz im Vergleich zur Wärmeausdehnung des Fühlerstabes 16, der einen geringeren Wärmeausdehnungskoeffizienten aufweist.

Die in Fig.3 eingezeichnete inaktive Länge entspricht dabei praktisch nur der Wandstärke der Endfläche 27 der Rohrkappe 39.

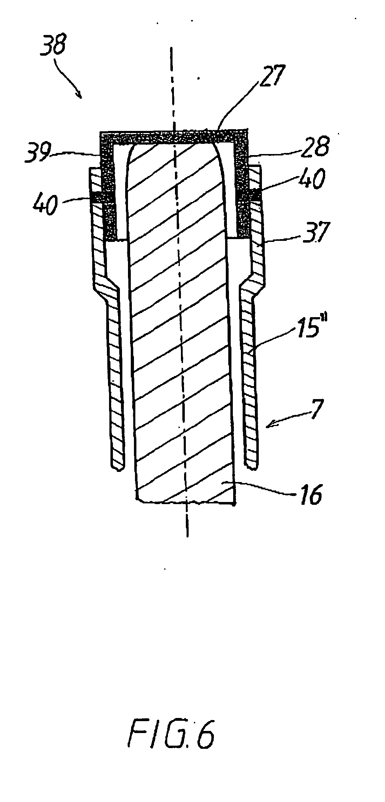

Fig.6 zeigt eine Ausführungsfonn des erfindungsgemäßen Temperaturfühlers 7, bei dem die Rohrkappe 39 durch ein in das freie Ende des Fühlerrohres 15" eingeschobenes Rohrstück 28 mit einer planebenen Endfläche 27 gebildet ist. Das freie Ende des Fühlerrohres 15" weist dabei einen Endbereich 37 mit einem gegenüber dem Innendurchmesser des Fühlerrohres 15" vergrößerten Innendurchmesser auf, sodaß der Innendurchmesser des durchmesser-vergrößerten Endbereiches 37 größer als der Außendurchmesser des Rohrstückes 28 ist. Die Rohrkappe 39 wird in den durchmesser-vergrößerten Endbereich 37 eingesetzt und an Verbindungsstellen 40 verschweißt oder vernietet.

Der z.B. in Fig.3 gezeigte Isolationskörper 11 ist vorzugsweise aus einer temperaturbeständigen Keramik gebildet, die unverrückbar am Heizkörper oder einer sonstigen Vorrichtung festgelegt sein muß, damit eine reproduzierbare Temperaturmessung ermöglicht werden kann.

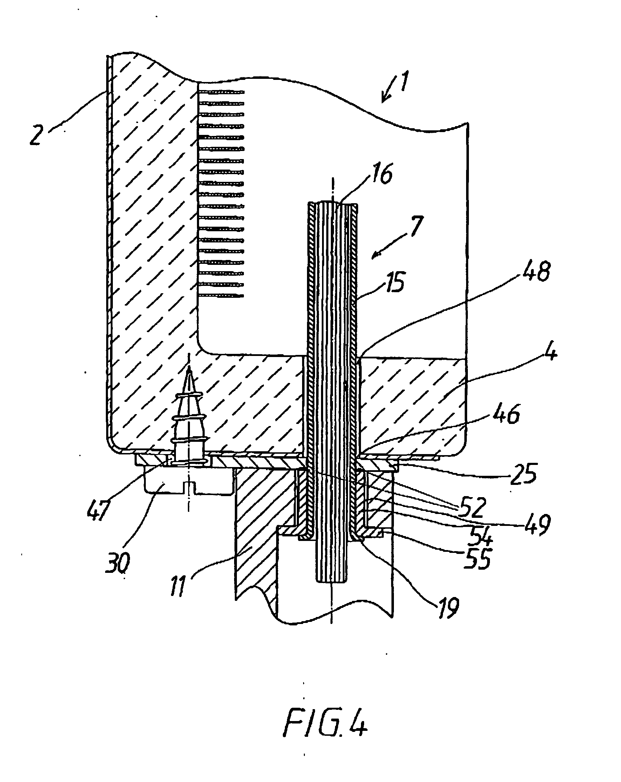

Zu diesem Zweck ist - wie in Fig.4 gezeigt - üblicherweise eine Stützlasche 25 vorgesehen, die Bohrungen 47 zur Befestigung des Temperaturfühlers 7 am Heizkörper 1 aufweist, welche mittels Schrauben 30 erfolgt, die durch die Bohrungen 47 hindurch in die Einbettmasse 4 getrieben werden.

Die Stützlasche 25 ist mit einem in die Durchbrechung 49 eingesetzten Rohrsitz 54 verbunden, an dem das Fühlerrohr 15 über einen flanschförmigen Ansatz 19 abgestützt ist. Das Fühlerrohr 15 kann dabei mit großem Spiel oder spielarm im Rohrsitz 54 verlaufen oder aber in diesen eingepreßt bzw. mit diesem verschweißt sein.

Erfindungsgemäß ist die Stützlasche 25 mit dem Rohrsitz 54 verschweißt, sodaß der die Isolationskörper-Durchbrechung 49 umgebende Wandungsbereich des Isolationskörpers 11 zwischen der Stützlasche 25 und dem Rohrsitz 54 gehalten ist. Dadurch ist der Rohrsitz 54 mit der Stützlasche so verbunden, daß der Rohrsitz 54 gegenüber dem Isolationskörper 11 weder verrutschen noch verkippen kann.

Der Rohrsitz 54 ist dabei rohrförmig ausgebildet, dessen Außendurchmesser kleiner als der Durchmesser der Isolationskörper-Durchbrechung 49 und dessen Innendurchmesser größer als der Durchmesser des Fühlerrohres 15 ausgebildet ist. An einem Ende des Rohrsitzes 54 ist ein Rohrflansch 55 ausgebildet, der an der Wandung des Isolationskörpers 11 anliegt.

Zur Durchführung des Fühlerrohres 15 weist die Stützlasche 25 eine Durchbrechung 46 auf, wobei im Bereich der Stoßfläche mit dem Rohrsitz 54 Schweißpunkt-Erhebungen 52 angeordnet, z.B. eingeprägt sind, die das Verschweißen des Rohrsitzes 54 mit der Stützlasche 25 vereinfachen. Sobald der Rohrsitz 54 von der einen Seite der Isolationskörper-Durchbrechung 49 eingesetzt ist und die Stützlasche 25 von der anderen Seite der Isolafionskörper-Durchbrechung 49 in Stoßkontakt mit dem Rohrsitz 54 gebracht worden ist, kann die Schweißung durch geeignetes Anlegen von Elektroden und Beschicken mit Strom durchgeführt werden. Die Stützlasche 25 liegt dabei mit ihren Schweißpunkt-Erhebungen 52 auf der Stirnseite des Rohrsitzes 54 auf. Da der Übergangswiderstand an den Schweißpunkt-Erhebungen 52 besonders hoch ist, kommt es dort zur Zündung eines Schweiß-Lichtbogens, sodaß der Schweißvorgang bevorzugt an den Schweißpunkt-Erhebuogen 52 in Gang gesetzt wird.

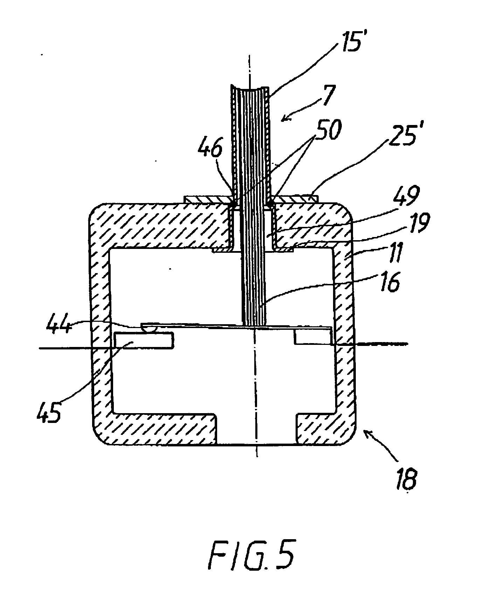

In Fig.5 ist eine Ausführungsform der Erfindung gezeigt, bei der die Stützlasche 25 unmittelbar mit dem an der Durchbrechung 49 abgestützten Fühlerrohr 15 verschweißt ist, sodaß der die Isolationskötper-Durchbrechung 49 umgebende Wandungsbereich des Isolationskörpers 11 zwischen der Stützlasche 25 und dem Fühlerrohr 15 gehalten ist. Um eine höhere Stabilität der Abstützung des Fühlerrohres 15 gegenüber dem Isoaltionskörper 11 zu erzielen, weist das Fühlerrohr 15 im Bereich der Isolationskörper-Durchbrechung 49 einen größeren Durchmesser als in seinem vorragenden Bereich auf.

Das Fühlerrohr 15 ist dabei wieder bevorzugt aus einem Metall, insbesondere aus einem hochtemperaturbeständigen Metall, vorzugsweise aus einer CrNi-Legierung gebildet und an Schweißpunkt-Erhebungen 50 mit der Stützlasche 25 verschweißt.

## Patentansprüche

1. Temperaturfühler (7) mit einem Fühlerrohr (15") und einem darin angeordneten Fühlerstab (16), wobei das Fühlerrohr (15") und der Fühlerstab (16) unterschiedliche Wärmeausdehnungskoeffizienten aufweisen, und wobei das eine Ende des Fühlerstabes (16) an einem Endstück (38) im Bereich des freien Endes des Fühlerrohres (15") abgestützt und das andere Ende des Fühlerstabes (16) als Betätigungsglied einer Schaltkontakt-Einheit (44, 45) ausgebildet ist, wobei das Endstück (38) des Fühlerrohres (15") durch eine das freie Ende des Fühlerrohres (15") abschließende Rohrkappe (39) gebildet ist, die unlösbar mit dem Fühlerrohr (15") verbunden ist, und wobei das eine Ende des Fuhlerstabes (16) an der dem Inneren des Fühlerrohres (15") zugekehrten Innenseite der Rohrkappe (39) abgestützt ist, **dadurch gekennzeichnet, daß** die Rohrkappe (39) durch ein in das freie Ende des Fühlerrohres (15") eingeschobenes Rohrstück (28) gebildet ist, daß das freie Ende des Fühlerrohres (15") einen Endbereich (37) mit einem gegenüber dem Innendurchmesser des Fühlerrohres (15") vergrößerten Innendurchmesser aufweist, sodaß der Innendurchmesser des durchmesser-vergrößerten Endbereiches (37) größer als der Außendurchmesser des Rohrstückes (28) ist.

2. Temperaturfühler nach Anspruch 1, **dadurch gekennzeichnet, daß** die Rohrkappc (39) mit dem Fühlerrohr (15) verschweißt, insbesondere laser-verschweißt ist.

3. Temperaturfühler nach Anspruch 1 oder 2, **dadurch gekennzeichnet, daß** das Rohrstück (28) an einer Seite durch eine im wesentlichen normal zur Rohrachse verlaufende planebene Endfläche (27) abgeschlossen ist.

4. Temperaturfühler nach Anspruch 3, **dadurch gekennzeichnet, daß** die Endfläche (27) des Rohrstückes (28) eine mittige, nach innen gerichtete Wölbung, insbesondere in Form einer Kugelkalotte (29), aufweist, an welcher der Fühlerstab (16) abgestützt ist.

5. Temperaturfühler nach einem der vorhergehenden Ansprüche 1 bis 4, **dadurch gekennzeichnet, daß** das Fühlerrohr (15") aus einem hochtemperaturbeständigen Metall, vorzugsweise aus einer CrNi-Legierung gebildet ist.

6. Temperaturrühler nach einem der vorhergehenden Ansprüche 1 bis 5, **dadurch gekennzeichnet, daß** der Fühlerstab (16) aus einer Keramik oder Quarzglas gebildet ist.

7. Temperaturfühler nach einem der vorhergehenden Ansprüche 1 bis 6, **dadurch gekennzeichnet, daß** die Rohrkappe (39) aus einem hochtemperaturbeständigen Metall, vorzugsweise aus einer CrNi-Legierung gebildet ist.

## Claims

1. A temperature sensor with a sensor tube (15") and a sensor rod (16) arranged inside it, with the sensor tube (15") and the sensor rod (16) having different thermal expansion coefficients, and with the one end of the sensor rod (16) being supported on an end piece (38) in the region of the free end of the sensor tube (15"), and the other end of the sensor rod (16) being arranged as an actuating member of a switch contact unit (44, 45), with the end piece (38) of the sensor tube (15") being formed by a tube cap (39) which closes the free end of the sensor tube (15") and which is non-detachably connected with the sensor tube (15"), and with the one end of the sensor rod (16) being supported on the inside of the tube cap (39) facing the interior of the sensor tube (15"), **characterized in that** the tube cap (39) is formed by a tube section (28) inserted into the free end of the sensor tube (15"), that the free end of the sensor tube (15") comprises an end region (37) with an inside diameter which is enlarged in comparison with the inside diameter of the sensor tube (15"), so that the inside diameter of the diameter-enlarged end region (37) is larger than the outside diameter of the tube section (28).

2. A temperature sensor according to claim 1, **characterized in that** the tube cap (39) is welded together with the sensor tube (15), especially laser-welded.

3. A temperature sensor according to claim 1 or 2, **characterized in that** the tube section (28) is sealed on one side by a planar flat end surface (27) which extends substantially normal to the tube axis.

4. A temperature sensor according to claim 3, **characterized in that** the end surface (27) of the tube section (28) comprises a central, inwardly facing arched portion, especially in form of a spherical cap (29), on which the sensor rod (16) is supported.

5. A temperature sensor according to one of the preceding claims 1 to 4, **characterized in that** the sensor tube (15") is made of a high-temperature-resistant metal, preferably a CrNi alloy.

6. A temperature sensor according to one of the preceding claims 1 to 5, **characterized in that** the sensor rod (16) is made of a ceramic material or quartz glass.

7. A temperature sensor according to one of the preceding claims 1 to 6, **characterized in that** the tube cap (39) is made of a high-temperature-resistant metal, preferably a CrNi alloy.

## Revendications

1. Sonde de température (7) avec un tube de sonde (15") et une tige de sonde (16) disposée dans celui-ci, dans laquelle le tube de sonde (15") et la tige de sonde (16) ont des coefficients de dilatation thermique différents, et dans laquelle une extrémité de la tige de sonde (16) s'appuie sur une partie d'extrémité (38) au niveau de l'extrémité libre du tube de sonde (15") et l'autre extrémité de la tige de sonde (16) est conformée comme un organe d'actionanement d'une unité de contact de commutation (44, 45), la partie d'extrémité (38) du tube de sonde (15") étant formée par un capuchon tubulaire (39) qui ferme l'extrémité libre du tube de sonde (15") et qui est relié de manière inamovible au tube de sonde (15"), et dans laquelle une extrémité de la tige de sonde (16) s'appuie sur la face intérieure du capuchon tubulaire (39) tournée vers l'intérieur du tube de sonde (15"), **caractérisée en ce que** le capuchon tubulaire (39) est formé par un tronçon de tube (28) inséré dans l'extrémité libre du tube de sonde (15"), **en ce que** l'extrémité libre du tube de sonde (15") présente une partie d'extrémité (37) dont le diamètre intérieur est augmenté par rapport au diamètre intérieur du tube de sonde (15"), de sorte que le diamètre intérieur de la partie d'extrémité (37) de diamètre agrandi est plus grande que le diamètre extérieur du tronçon de tube (28).

2. Sonde de température selon la revendication 1, **caractérisée en ce que** le capuchon tubulaire (39) est soudé au tube de sonde (15), en particulier soudé par laser.

3. Sonde de température selon la revendication 1 ou 2, **caractérisée en ce que** le tronçon de tube (28) est fermé d'un côté par une surface d'extrémité (27) plane sensiblement perpendiculaire à l'axe du tube.

4. Sonde de température selon la revendication 3, **caractérisée en ce que** la surface d'extrémité (27) du tronçon de tube (28) présente un bombement central dirigé vers l'intérieur, en particulier en forme de calotte sphérique (29), sur lequel la tige de sonde (16) s'appuie.

5. Sonde de température selon l'une des revendications 1 à 4, **caractérisée en ce que** le tube de sonde (15") est fait d'un métal résistant à haute température, de préférence d'un alliage de chrome et de nickel.

6. Sonde de température selon l'une des revendications 1 à 5, **caractérisée en ce que** la tige de sonde (16) est faite d'une céramique ou de verre au quartz.

7. Sonde de température selon l'une des revendications 1 à 6, **caractérisée en ce que** le capuchon tubulaire (39) est fait d'un métal résistant à haute température, de préférence d'un alliage de chrome et de nickel.
